# EUROPEAN PATENT SPECIFICATION

(11) **EP 1 625 183 B1**
(45) Date of publication and mention of the grant of the patent: **21.11.2007**
(21) Application number: 04748588.3
(22) Date of filing: 18.05.2004
(51) Int. Cl.: C09D 4/06, C09D 7/12, C08K 9/08

(54) **CURABLE COMPOSITIONS AND CURED FILM THEREOF**
HÄRTBARE ZUSAMMENSETZUNGEN UND GEHÄRTETER FILM DARAUS
COMPOSITIONS DURCISSABLES ET FILM DURCI OBTENU A PARTIR DESDITES COMPOSITIONS

(30) Priority: 20.05.2003 JP 2003141838
(43) Date of publication of application: 15.02.2006
(73) Proprietor: JSR Corporation, Tokyo (JP)
(72) Inventor: UEDA, Jirou, Tokyo 104-841 0, Ibaraki (JP); SHINOHARA, Noriyasu, Toky o 104-8410 (JP); NISHIWAKI, Isoa, Tokyo 104-8410 (JP); TANABE, Takayoshi, Tokyo 104-8410 (JP); SOUTHWELL, John, Edmond, Elgin, 60137 (US)
(74) Representative: den Hartog, Jeroen H.J.
(86) International application number: PCT/NL2004/000345
(87) International publication number: WO 2004/104114

(56) References cited:
- WO-A-01/81466

## Description

### Field of the Invention

The present invention relates to a curable composition, more particularly, to a curable composition exhibiting excellent coatability and capable of forming coatings (films) that have high hardness, superior scratch resistance, and excellent transparency, and that, depending on the composition, do not cause a slip characteristic-providing component to bleed out and can exhibit superior and consistent surface slip characteristics on the surface of various substrates. The present invention also relates to a cured film made from the curable composition.

### Prior Art

In recent years, there is a strong desire for the development of a curable composition exhibiting excellent coatability as a protective coating material for preventing damages (scratches) or stains or as a coating material for an antireflection film on the surface of various substrates such as plastics (polycarbonate, polymethyl methacrylate, polystyrene, polyester, polyolefin, epoxy resin, melamine resin, triacetyl cellulose resin, ABS resin, AS resin, norbornene resin), metals, wood, paper, glass, and slates, and capable of forming a cured film with excellent hardness, scratch resistance, wear resistance, surface slip characteristics, low curling properties, adhesion, transparency, chemical resistance, and external appearance on the surface of these substrates.

Various compositions have been proposed to satisfy this demand. However, curable compositions exhibiting excellent coatability and capable of producing a cured film exhibiting high hardness, superior scratch resistance, excellent transparency, and excellent surface slip characteristics that can be maintained with the passage of time have not been obtained yet.

As a method for providing surface slip characteristics, Patent Document 1 discloses a photocurable resin composition comprising an acrylic ester of bisphenol A diglycidyl ether polymer, dipentaerythritol monohydroxy pentaacrylate, photopolymerization initiator, inorganic particles, and terminal reactive polydimethylsiloxane to be used as a photocurable coating material. Although cured products of such a composition exhibit some improvement in surface slip characteristics, these products exhibit a significant change in the surface slip characteristics with the passage of time and may cause the slip characteristic-providing component to bleed out. Their hardness and scratch resistance are not necessarily satisfactory.

### Patent Document 1

Japanese Patent Application Laid-open No. 11-124514.

"Patent application WO 01/81466 discloses a photocurable resin composition comprising reactive inorganic particles, a polymerizable organic compound having two or more polymerizable unsaturated groups, and a terminal reactive polysiloxane compound. Although cured products of such a composition exhibit some improvement In surface slip characteristics, these products may cause the slip characteristic-providing component to bleed out, resulting in an non-satisfactory appearance.

### Problems to be solved by the invention

An object of the present invention is to provide a curable composition exhibiting excellent coatability and capable of forming coatings (films) that have high hardness, superior scratch resistance, and excellent transparency, and that, depending on the composition, do not cause a slip characteristic-providing component to bleed out and can exhibit superior and consistent surface slip characteristics on the surface of various substrates. The present invention also provides a cured film made from the curable composition.

### Means for Solving the Problems

As a result of extensive studies to achieve the above object, the present inventors have found that a cured film satisfying all of the above characteristics can be produced by using a curable composition comprising (A) reactive particles prepared by reacting oxide particles of a specific element with an organic compound having a specific organic group, (B) an organic compound having two or more polymerizable unsaturated groups, and (C) a both terminal reactive polysiloxane compound having a polymerizable group. This finding has led to the completion of the present invention.

Specifically, the present invention provides a curable composition comprising: (A) reactive particles prepared by reacting (A1) oxide particles of at least one element selected from the group consisting of silicon, aluminum, zirconium, titanium, zinc, germanium, indium, tin, antimony, and cerium with (A2) an organic compound having a polymerizable unsaturated group and a hydrolyzable silyl group in the molecule (hereinafter referred to from time to time as "reactive particles (A)"), (B) an organic compound having two or more polymerizable unsaturated groups (hereinafter referred to from time to time as "polymerizable organic compound (B)"), and (C) a both terminal reactive polysiloxane compound other than the component (B) (hereinafter referred to from time to time as "both terminal reactive polysiloxane compound (C)").

The present invention further provides a cured film produced from the curable composition.

### Preferred Embodiment of the Invention

The reactive particles (A) used in the present invention can be obtained by reacting (A1) oxide particles of at least one element selected from the group consisting of silicon, aluminum, zirconium, titanium, zinc, germanium, indium, tin, antimony, and cerium with (A2) an organic compound containing a polymerizable unsaturated group and a hydrolyzable silyl group in the molecule.

For obtaining colorless cured films from the curable composition, the oxide particles (A1) used for preparing the reactive particles (A) should be oxide particles of at least one element selected from the group consisting of silicon, aluminum, zirconium, titanium, zinc, germanium, indium, tin, antimony, and cerium.

As examples of these oxide particles (A1), particles of silica, alumina, zirconia, titanium oxide, zinc oxide, germanium oxide, indium oxide, tin oxide, indium-tin oxide (ITO), antimony oxide, and cerium oxide can be given. Of these, particles of silica, alumina, zirconia, and antimony oxide are preferable in view of high hardness. These particles may be used either individually or in combination of two or more. The oxide particles (A1) are preferably used in the form of a powder or a solvent dispersion sol. If the oxide particles are used in the form of a solvent dispersion sol, an organic solvent is preferable as a dispersion medium in view of mutual solubility with other components and dispersibility. Examples of such an organic solvent include alcohols such as methanol, ethanol, isopropanol, butanol, and octanol; ketones such as acetone, methyl ethyl ketone, methyl isobutyl ketone, and cyclohexanone; esters such as ethyl acetate, butyl acetate, ethyl lactate, γ-butyrolactone, propylene glycol monomethyl ether acetate, and propylene glycol monoethyl ether acetate; ethers such as ethylene glycol monomethyl ether and diethylene glycol monobutyl ether; aromatic hydrocarbons such as benzene, toluene, and xylene; and amides such as dimethylformamide, dimethylacetamide, and N-methylpyrrolidone. Of these, methanol, isopropanol, butanol, methyl ethyl ketone, methyl isobutyl ketone, ethyl acetate, butyl acetate, toluene, and xylene are preferable.

The number average particle diameter of the oxide particles (A1) is preferably from 0.001 µm to 2 µm, more preferably from 0.003 µm to 1 µm, and particularly preferably from 0.005 µm to 0.5 µm. If the number average particle diameter is more than 2 µm, transparency of the resulting cured film and the surface conditions of the film tend to be impaired. Various types of surfactants and amines may be added in order to improve dispersibility of the particles.

Among silicon oxide particles, given as examples of commercially available products of silica particles are colloidal silica available as Methanol Silica Sol, lPA-ST, MEK-ST, NBA-ST, XBA-ST, DMAC-ST, ST-UP, ST-OUP, ST-20, ST-40, ST-C, ST-N, ST-O, ST-50, and ST-OL (all manufactured by Nissan Chemical Industries, Ltd.). As powdery silica, products available as AEROSIL 130, AEROSIL 300, AEROSIL 380, AEROSIL TT600, AEROSIL OX50 ((AEROSIL is a trademark) manufactured by Nippon Aerosil Co., Ltd.), Sildex H31, H32, H51, H52, H121, H122 (manufactured by Asahi Glass Co., Ltd.), E220A, E220 (manufactured by Tosoh Silica Corp.), SILYSIA 470 (manufactured by Fuji Silysia Chemical Ltd.) and SG Flake (manufactured by Nippon Sheet Glass Co., Ltd.) can be given.

Given as commercially available products of aqueous dispersion products of alumina are Alumina Sol-100, -200, -520 (manufactured by Nissan Chemical Industries, Ltd.); as an isopropanol dispersion product of alumina, AS-150l (manufactured by Sumitomo Osaka Cement Co., Ltd.); as a toluene dispersion product of alumina, AS-150T (manufactured by Sumitomo Osaka Cement Co., Ltd.); as a toluene dispersion product of zirconia, HXU-110JC (manufactured by Sumitomo Osaka Cement Co., Ltd.); as an aqueous dispersion product of zinc antimonate powder, CELNAX (manufactured by Nissan Chemical Industries, Ltd.); as powders and solvent dispersion products of alumina, titanaium oxide, tin oxide, indium oxide, zinc oxide, NanoTek (manufactured by C.I. Kasei Co., Ltd.); as an aqueous dispersion sol of antimony-doped tin oxide, SN-100D (manufactured by Ishihara Sangyo Kaisha, Ltd.); as an ITO powder, a product manufactured by Mitsubishi Materials Corp.; and as an aqueous dispersion liquid of cerium oxide, Needlar (manufactured by Taki Chemical Co., Ltd.).

The shape of oxide particles (A1) may be globular, hollow, porous, rod-like, plate-like, fibrous, or amorphous, with a globular shape being preferable. The specific surface area of the oxide particles (A1) determined by the BET method using nitrogen is preferably in the range of 10 to 1,000 m²/g, and more preferably 100 to 500 m²/g. The oxide particles (A1) can be used in the form of a dry powder or a powder dispersed in water or an organic solvent. For example, a dispersion liquid of fine oxide particles known in the art may be used as a solvent dispersion sol of the above oxides. Use of an organic solvent dispersion sol of oxides is particularly preferable when a cured product having excellent transparency is required.

The organic compound (A2) used in the present invention is a compound having a polymerizable unsaturated group and a hydrolyzable silyl group in the molecule.

There are no specific limitations to the polymerizable unsaturated group contained in the organic compound (A2). An acryloyl group, methacryloyl group, vinyl group, propenyl group, butadienyl group, styryl group, ethynyl group, cinnamoyl group, maleate group, and acrylamide group can be given as suitable examples. The polymerizable unsaturated group is a structural unit which undergoes addition polymerization by active radical species.

The hydrolyzable silyl group contained in the organic compound (A2) is a silanol group or a group that produces a silanol group by hydrolysis. As the group that produces a silanol group, a group in which an alkoxy group, aryloxy group, acetoxy group, amino group, or a halogen atom is bonded to a silicon atom can be given. An organic compound comprising an alkoxy group or aryloxy group bonded to a silicon atom, specifically, an organic compound containing an alkoxysilyl group or an aryloxysilyl group is preferable. As the alkoxy group, alkoxy groups containing 1-8 carbon atoms are preferable; and as the aryloxy group, aryloxy groups containing 6-18 carbon atoms are preferable.

The silanol group or the silanol group-forming group is a structural unit which bonds to the oxide particles (A1) by condensation or condensation following hydrolysis.

The organic compound (A2) preferably contains, in addition to the Polymerizable unsaturated group and hydrolyzable silyl group, a group shown by the following formula (1): 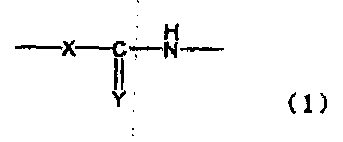 wherein X represents NH, O (oxygen atom), or S (sulfur atom), and Y represents O or S.

There are 6 types for the group shown by the above formula (1), specifically, they are [-O-C(=O)-NH-], [-O-C(=S)-NH-], [-S-C(=O)-NH-], [-NH-C(=O)-NH-], [-NH-C(=S)-NH-], and [-S-C(=S)-NH-]. These groups may be used either singly or in combination of two or more. The compound preferably has, in addition to the group represented by [-O-C(=O)-NH-], at least one of the groups represented by [-O-C(=S)-NH-] and [-S-C(=O)-NH-] for ensuring excellent heat stability.

It is presumed that the groups represented by the above formula (1) generate a moderate cohesive force by a hydrogen bond between the molecules, thereby providing the resulting cured product with characteristics such as superior mechanical strength, excellent adhesion to substrates, and good heat resistance.

The compound shown by the following formula (3) can be given as a preferable specific example of the organic compound (A2). 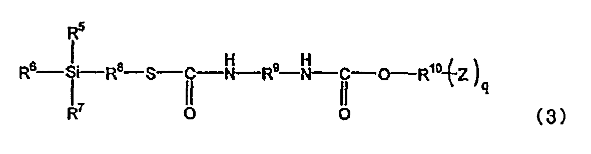 wherein at least one of R⁵, R⁶, and R⁷ represents a hydroxyl group, alkoxy group, or aryloxy group, with the other groups representing a hydrogen atom, an alkyl group, or an aryl group, R⁸ represents a divalent organic group having an aliphatic structure with 1-12 carbon atoms or an aromatic structure, R⁹ represents a divalent organic group, R¹⁰ represents an organic group having a valence of (q+1), Z represents a monovalent organic group having a polymerizable unsaturated group which reacts by an intermolecular crosslinking reaction in the presence of active radical species, and q is an integer from 1 to 20.

As the alkoxy group or alkyl group shown by R⁵, R⁶, or R⁷ in the formula (3), hydrocarbon groups having 5-8 carbon atoms can be given. Preferable groups include a methoxy group, ethoxy group, propoxy group, butoxy group, octyloxy group, methyl group, ethyl group, propyl group, butyl group, and octyl group. As the aryloxy group or aryl group, groups containing 6-18 carbon atoms are preferable, with particularly preferable groups being a phenoxy group, xylyloxy group, phenyl group, xylyl group, and the like. As examples of the group represented by R⁵(R⁶)(R⁷)Si-, a trimethoxysilyl group, triethoxysilyl group, triphenoxysilyl group, methyldimethoxysilyl group, and dimethylmethoxysilyl group can be given. Of these, a trimethoxysilyl group and triethoxysilyl group are preferable.

The group R⁸ may include a linear, branched, or cyclic structure. Specific examples of such a structural unit are aliphatic groups having 1-12 carbon atoms such as methylene, ethylene, propylene, methyl ethylene, butylene, methyl propylene, octamethylene, and dodecamethylene; alicyclic groups having 3-12 carbon atoms such as cyclohexylene; and aromatic groups having 6-12 carbon atoms such as phenylene, 2-methylphenylene, 3-methylphenylene, and biphenylene. Of these, preferable groups are methylene, propylene, cyclohexylene, phenylene, and the like.

As the group R⁹, a divalent organic group having a molecular weight from 14 to 10,000, and preferably from 76 to 500 is desirable. Examples of such an organic group include divalent organic groups having an aliphatic or aromatic structure which may include a linear, branched, or cyclic structure. As examples of such a structure, divalent organic groups having a linear structure such as methylene, ethylene, propylene, tetramethylene, hexamethylene, 2,2,4-trimethylhexamethylene, and 1-(methylcarboxyl)pentamethylene; divalent organic groups having an alicyclic structure such as isophorone, cyclohexylmethane, methylenebis(4-cyclohexane), hydrogenated dienylmethane, hydrogenated xylene, and hydrogenated toluene; and divalent organic groups having an aromatic structure such as benzene, toluene, xylene, p-phenylene, diphenylmethane, diphenylpropane, and naphthalene can be given.

As R¹⁰, linear or branched, saturated or unsaturated hydrocarbon groups with a valence of (q+1) are given. Specific examples include, in addition to the divalent organic groups given for the group R⁹, a trivalent organic group such as 2-ethyl-2-methylenepropylene, a trivalent organic group having an isocyanuric structure, a tetravalent organic group such as a substituted alkylene group (2,2-dimethylenepropylene, for example), and a hexavalent organic group such as an alkylene group derived from dipentaerythritol. Of these groups, ethylene, 2-ethyl-2-methylenepropylene, a trivalent organic group having an isocyanuric structure, a substituted alkylene group such as 2,2-dimethylenepropylene, and an alkylene group derived from dipentaerythritol are preferable.

As examples of the group represented by Z, an acryloxy group, methacryloxy group, vinyl group, propenyl group, butadienyl group, styryl group, ethynyl group, cinnamoyl group, maleate group, and acrylamide group can be given. Of these, an acryloxy group, methacryloxy group, and vinyl group are preferable.

q is an integer preferably from 1 to 20, more preferably from 1 to 10, and particularly preferably from 1 to 5.

These organic compounds (A2) can be prepared using a method described in Japanese Patent Application Laid-open No. 9-100111, for example.

The reactive particles can be obtained by reacting the oxide particles (A1) with the organic compound (A2). Given as the methods for reacting the oxide particles (A1) with the organic compound (A2) are a method of mixing the oxide particles (A1) and the organic compound (A2) in the presence of an organic solvent containing water to effect hydrolysis and condensation reactions at the same time, a method of previously hydrolyzing the organic compound (A2) in the presence of an organic solvent containing water, and then carrying out condensation reaction with the oxide particles (A1), and a method of mixing the oxide particles (A1) with the organic compound (A2) in the presence of water, an organic solvent, and other components such as a compound having two or more polymerizable unsaturated groups in the molecule and a radical polymerization initiator to effect hydrolysis and condensation reactions at the same time. The reactive particles (A) in which the oxide particles (A1) and the organic compound (A2) are chemically bonded by the reaction of at least one element selected from the group consisting of silicon, aluminum, zirconium, titanium, zinc, germanium, indium, tin, antimony, and cerium which is present on the surface of the oxide particles (A1) with the silicon atom which is present in the molecule of the organic compound (A2) via an oxygen atom can be obtained by these methods.

When the oxide particles (A1) are silica particles and the organic compound (A2) is an organic compound containing a silanol group or silanol group-forming group, polymerizable silica particles in which silica particles and the organic compound (A2) are bonded via a silyloxy group can be obtained by mixing these materials in water or an organic solvent containing water, followed by evaporation of the water or organic solvent under vacuum or atmospheric pressure. This reaction may be carried out according to the method described in Japanese Patent Application Laid-open No. 9-100111, for example.

The amount of the organic compound (A2) reacted with the oxide particles (A1) is preferably 0.01 wt% or more, more preferably 0.1 wt% or more, and particularly preferably 1 wt% or more, of 100 wt% of the reactive particles (A) (total weight of the oxide particles (A1) and organic compound (A2)). If the amount of the organic compound (A2) bonded to the oxide particles (A1) is less than 0.01 wt%, dispersibility of the reactive particles (A) in the composition may be inadequate, whereby transparency and scratch resistance of the resulting cured product may become insufficient. The proportion of the oxide particles (A1) among the raw materials in the preparation of the reactive particles (A) is preferably 5-99 wt%, and still more preferably 10-98 wt%.

The amount of the reactive particles (A) to be incorporated in the curable composition is preferably 5-85 wt%, and still more preferably 10-80 wt%, of 100 wt% of the composition (the total weight of the reactive particles (A), polymerizable organic compound (B), and both terminal reactive polysiloxane compound (C)). If the amount is less than 5 wt%, a cured product with high hardness may not be obtained. If more than 85 wt%, film formability may be inadequate.

The content of the reactive particles (A) refers to the solid content, which does not include the amount of solvents when the reactive particles (A) are used in the form of a solvent dispersion sol.

In another preferred embodiment, the composition according to the invention also comprises a solvent with a medium, or preferably low evaporation rate. Medium evaporation rate is defined as an evaporation rate of 0.8-3.0 times the rate of evaporation of n-Butyl Acetate, under the same conditions. A low evaporation rate is defined as an evaporation rate less than 0.8 times the evaporation rate of n-butyl acetate under the same conditions. Relative Evaporation rates can be found e.g. in the Shell Chemical Company "Chart of Solvent Properties".

In a preferred embodiment, propylene glycol methyl ether acetate (PGMEA) is used as a solvent with a low evaporation rate. Use of a solvent with a medium to low evaporation rate in the compositions according to the invention has an advantage that the compositions, when applied by spin coating, result in more uniform coatings with a better quality than composition without a solvent with a medium or low evaporation rate.

A cured product is prepared by adding a polymerization initiator (D) to the above composition and polymerizing the monomers with irradiation of light and/or heating.

The cured product of the curable composition comprising the reactive particles (A), polymerizable organic compound (B), and both terminal reactive polysiloxane compound (C) can form coatings (films) with high hardness, excellent scratch resistance, and superior surface slip characteristics.

The polymerizable organic compound (B) is suitably used to improve film formability of the composition. There are no specific limitations to the polymerizable organic compound (B) insofar as the compound comprises two or more polymerizable unsaturated groups in the molecule. For example, (meth)acrylates and vinyl compounds can be given as examples. Of these, (meth)acrylates are preferable.

Examples of the (meth)acrylates include hydroxyl group-containing (meth)acrylates such as trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, glycerol tri(meth)acrylate, tris(2-hydroxyethyl)isocyanurate tri(meth)acrylate, ethylene glycol di(meth)acrylate, 1,3-butanediol di(meth)acrylate, 1,4-butanediol di(meth)acrylate, 1,6-hexanediol di(meth)acrylate, neopentyl glycol di(meth)acrylate, diethylene glycol di(meth)acrylate, triethylene glycol di(meth)acrylate, dipropylene glycol di(meth)acrylate, and bis(2-hydroxyethyl)isocyanurate di(meth)acrylate; poly(meth)acrylates prepared by adding ethylene oxide or propylene oxide to the hydroxyl group of these (meth)acrylates; and oligoester (meth)acrylates, oligoether (meth)acrylates, oligourethane (meth)acrylates, and oligoepoxy (meth)acrylates having two or more (meth)acryloyl groups in the molecule. Of these, dipentaerythritol hexa(meth)acrylate, dipentaerythritol penta(meth)acrylate, pentaerythritol tetra(meth)acrylate, and ditrimethylolpropane tetra(meth)acrylate are preferable.

As examples of the vinyl compounds, divinylbenzene, ethylene glycol divinyl ether, diethylene glycol divinyl ether, and triethylene glycol divinyl ether can be given.

Given as examples of commercially available products of the polymerizable organic compound (B) are Aronix(R) M-400, M-408, M-450, M-305, M-309, M-310, M-315, M-320, M-350, M-360, M-208, M-210, M-215, M-220, M-225, M-233, M-240, M-245, M-260, M-270, M-1100, M-1200, M-1210, M-1310, M-1600, M-221, M-203, TO-924, TO-1270, TO-1231, TO-595, TO-756, TO-1343, TO-902, TO-904, TO-905, TO-1330 (manufactured by Toagosei Co., Ltd.); KAYARAD D-310, D-330, DPHA, DPCA-20, DPCA-30, DPCA-60, DPCA-120, DN-0075, DN-2475, SR-295, SR-355, SR-399E, SR-494, SR-9041, SR-368, SR-415, SR-444, SR-454, SR-492, SR-499, SR-502, SR-9020, SR-9035, SR-111, SR-212, SR-213, SR-230, SR-259, SR-268, SR-272, SR-344, SR-349, SR-601, SR-602, SR-610, SR-9003, PET-30, T-1420, GPO-303, TC-120S, HDDA, NPGDA, TPGDA, PEG400DA, MANDA, HX-220, HX-620, R-551, R-712, R-167, R-526, R-551, R-712, R-604, R-684, TMPTA, THE-330, TPA-320, TPA-330, KS-HDDA, KS-TPGDA, KS-TMPTA (manufactured by Nippon Kayaku Co., Ltd.); and Light Acrylate PE-4A, DPE-6A, DTMP-4A (manufactured by Kyoeisha Chemical Co., Ltd.).

The amount of the polymerizable organic compound (C) used in the present invention is preferably 10-90 wt%, and more preferably 15-80 wt%, for 100 wt% of the composition. If the proportion is less than 10 wt% or exceeds 90 wt%, a cured product with high hardness may not be obtained.

There are no specific limitations to the both terminal reactive polysiloxane compound (C) insofar as such a compound is a both terminal reactive polysiloxane compound having a polymerizable group on both terminals. A polydimethylsiloxane compound is preferable in view of easy availability. There are no specific limitations to the polydimethylsiloxane compound insofar as the compound has a polymerizable group and two or more dimethylsiloxane structures. An appropriate spacer structure may be present between the polysiloxane chain and the polymerizable group. As examples of a preferable spacer structure, spacers including the structure shown by the following formula (4) can be given.

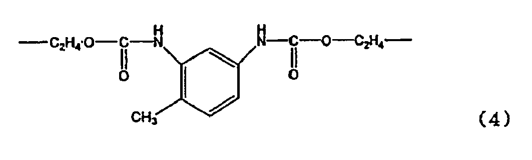

There are no specific limitations to the polymerizable group included in the both terminal reactive polysiloxane compound (C). Polymerizable unsaturated groups such as an acryloxy group, methacryloxy group, vinyl group, propenyl group, butadienyl group, styryl group, ethynyl group, cinnamoyl group, maleate group, and acrylamide group; and epoxy-substituted alkyl or alkoxy groups such as 2,3-epoxypropyloxy group and epoxycyclohexyl group can be given as examples. Of these, an acryloxy group and methacryloxy group are preferable due to the capability of providing the curable composition with radiation curability. The polymerizable groups in the two terminals of the component (C) may be a group having the same structure or groups having different structures.

The polystyrene-reduced number average molecular weight of the both terminal reactive polysiloxane compound (C) determined by the GPC method is preferably from 800 to 15,000, and particularly preferably from 1,000 to 7,000. If the number average molecular weight is less than 800, surface slip characteristics of the cured products of the composition containing such a compound may not be sufficient; if more than 15,000, the composition containing such a compound may have poor coatability.

Compounds shown by the following formula (2) are preferable as the both terminal reactive polysiloxane compound (*C*): 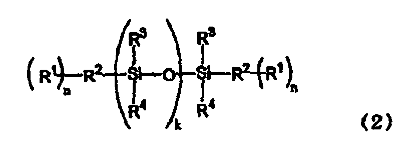 wherein R¹ is an organic group having an acryloxy group or methacryloxy group, R² is an organic group having a valence of (n+1), R³ and R⁴ are individually a methyl group or phenyl group, n is a numeral from 1 to 3, and k is a numeral from 1 to 150.

As examples of the group represented by R¹ in the formula (2), in addition to an acryloxy group and methacryloxy group, (meth)acrylate groups such as a glycidyl (meth)acrylate group and phenyl (meth)acrylate groups such as a benzyl acrylate group can be given. Polymerizable unsaturated groups such as an acryloxy group and methacryloxy group are preferable to ensure excellent surface characteristics after curing the composition, with an acryloxy group being particularly preferred.

Therefore, in a preferred embodiment, the composition according to the invention is a composition comprising a compound (C), representing the both terminal reactive polysiloxane compound, which compound (C) is a compound according to formula (2), whereby R¹ in the formula (2) is an acryloxy group.

As the group represented by R², an organic group with a valence of (n+1) having a molecular weight from 28 to 14,000, and particularly from 28 to 5,000, is preferable in view of mutual solubility with other components. As preferable examples of the group represented by R², an organic group having an aliphatic or aromatic structure, which may include an urethane bond, ether bond, ester bond, or amide bond, and an organic group having both of such aliphatic and aromatic structures can be given. As examples of the aliphatic structure, linear structures such as methylene, ethylene, propylene, tetramethylene, hexamethylene, 2,2,4-trimethylhexamethylene, and 1-(methylcarboxyl)-pentamethylene; and alicyclic structures such as isophorone, cyclohexylmethane, methylenebis(4-cyclohexane), hydrogenated dienylmethane, hydrogenated xylene, and hydrogenated toluene can be given. As examples of the aromatic structure, benzene, toluene, xylene, p-phenylene, diphenylmethane, diphenylpropane, and naphthalene can be given.

In addition, if R² has an urethane bond, mutual solubility of the component (C) with other components can be Improved, which results in excellent coatability of the curable composition. The number of the urethane bond in the molecule may be either one or two or more. As particularly preferable R², the structure shown by the following formula (5) can be given.

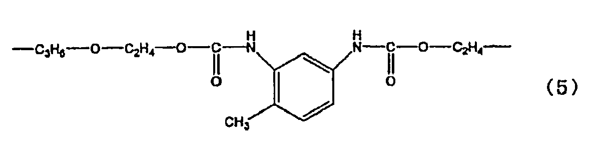

The compound of the formula (2) in which R² has an urethane bond can be prepared by, for example, reacting a polyisocyanate, a reactive silicone compound having a hydroxyl group on both terminals, and a hydroxyl group-containing (meth)acrylate.

As examples of the polyisocyanate that can be suitable for this purpose, diisocyanates such as 2,4-tolylene diisocyanate, 2,6-tolylene diisocyanate, 1 ,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylenebis(4-cyclohexylisocyanate), 2,2,4-trimethylhexamethylene diisocyanate, bis(2-isocyanateethyl) fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate, and 2,5(or 6)-bis(isocyanatemethyl)-bicyclo[2.2.1]heptane can be given. Of these, 2,4-tolylene diisocyanate, isophorone diisocyanate, xylylene diisocyanate, and methylenebis(4-cyclohexylisocyanate) are particularly preferable. These compounds may be used either individually or in combination of two or more.

The polydimethylsiloxane structure in the compound (C) can be introduced using, for example, a silicone compound having a hydroxyl group on both terminals.

As such a silicone compound, a silicone compound having an organic group such as a 3-(2'-hydroxyethoxy)propyl group, 3-(2',3'-dihydroxypropyloxy)propyl group, 3-(2'-ethyl-2'-hydroxymethyl-3-hydroxy)propyl group, or 3-(2'-hydroxy-3'-isopropylamino)propyl group on both terminals can be given. These compounds may be used either individually or in combination of two or more.

The silicone compound having a hydroxyl group on both terminals mentioned above can also be obtained as a commercially available product such as Silaplaine FM-4411, FM-4421, FM-4425 manufactured by Chisso Corp.

A (meth)acryloyl group which is preferable as the group R¹ in the formula (2) is essential for providing the compound (C) used in the present invention with radiation curability. The (meth)acryloyl group can be introduced by reacting a hydroxyl group-containing (meth)acrylate compound with a polyisocyanate compound, for example.

Given as examples of such a (meth)acrylate compound containing a hydroxyl group are 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanediol mono(meth)acrylate, 2-hydroxyalkyl (meth)acryloyl phosphate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate, and (meth)acrylates shown by the following formula (6) or (7): 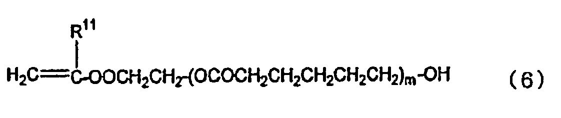 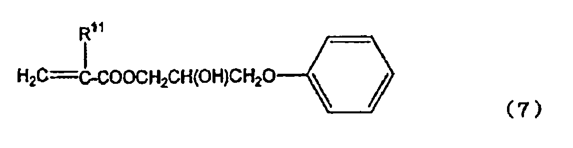 wherein R¹¹ represents a hydrogen atom or a methyl group and m is an integer from 1-15.

Compounds obtained by the addition reaction of (meth)acrylic acid and a compound containing a glycidyl group such as alkyl glycidyl ether, allyl glycidyl ether, or glycidyl (meth)acrylate may be used. Of these (meth)acrylates containing a hydroxyl group, 2-hydroxyethyl (meth)acrylate and 2-hydroxypropyl (meth)acrylate are particularly preferable. These compounds may be used either individually or in combination of two or more.

As the reaction for obtaining the compound (C) having two or more urethane bonds, a method of reacting the silicone compound having a hydroxyl group, polyisocyanate, and hydroxyl group-containing (meth)acrylate all together; a method of reacting the silicone compound with the polyisocyanate, and then with the hydroxyl group-containing (meth)acrylate; and a method of reacting the polyisocyanate with the hydroxyl group-containing (meth)acrylate, and then with the silicone compound can be used, for example. The reaction is preferably carried out by using these compounds in a proportion in which the hydroxyl group equivalent in the silicone compound having a hydroxyl group and the hydroxyl group-containing (meth)acrylate is almost the same as the isocyanate group equivalent in the polyisocyanate.

The polyurethane polyol structure can be introduced between the polydimethylsiloxane structure and the (meth)acryloyl group by adding a polyol to the starting materials of the above reaction.

As the method for obtaining the compound (C) having a polyurethane polyol structure, a method of reacting the silicone compound having a hydroxyl group, polyol, polyisocyanate, and hydroxyl group-containing (meth)acrylate all together; a method of reacting the polyol with the polyisocyanate, and then with the silicone compound and hydroxyl group-containing (meth)acrylate; a method of reacting the polyisocyanate, silicone compound, and hydroxyl group-containing (meth)acrylate, and then reacting the resulting mixture with the polyol; a method of reacting the polyisocyanate with the silicone compound, then with the polyol, and finally with the hydroxyl group-containing (meth)acrylate; or a method of reacting the polyisocyanate with the hydroxyl group-containing (meth)acrylate, then with the polyol, and finally with the silicone compound can be given, for example.

As examples of the polyol used here, a polyether diol, polyester diol, polycarbonate diol, and polycaprolactone diol can be given. These polyols may be used either individually or in combination of two or more. There are no specific limitations to the manner of polymerization of the structural units in these polyols. Any random polymerization, block polymerization, and graft polymerization is acceptable.

Specific examples of the polyether diol include polyethylene glycol, polypropylene glycol, polytetramethylene glycol, polyhexamethylene glycol, polyheptamethylene glycol, polydecamethylene glycol, and polyether diols obtained by ring-opening copolymerization of two or more ion-polymerizable cyclic compounds. As examples of the ion-polymerizable cyclic compounds, cyclic ethers such as ethylene oxide, propylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, and glycidyl benzoate can be given. Examples of specific copolymers of the above two or more ion-polymerizable cyclic compounds include a copolymer of tetrahydrofuran and propylene oxide, a copolymer of tetrahydrofuran and 2-methyltetrahydrofuran, a copolymer of tetrahydrofuran and 3-methyltetrahydrofuran, a copolymer of tetrahydrofuran and ethylene oxide, a copolymer of propylene oxide and ethylene oxide, a copolymer of butene-1-oxide and ethylene oxide, and a ternary copolymer of tetrahydrofuran, butene-1-oxide, and ethylene oxide. A polyether diol produced by ring-opening copolymerization of the above ion-polymerizable cyclic compounds and cyclic imines such as ethyleneimine, cyclic lactonic acids such as glycolic acid lactide, or dimethylcyclopolysiloxanes can also be used. The ring-opening copolymer of these ion-polymerizable cyclic compounds may be either a random copolymer or a block copolymer.

As examples of the polyester diol, polyester diols obtained by reacting a polyhydric alcohol with a polybasic acid can be given. Examples of the polyhydric alcohol include ethylene glycol, polyethylene glycol, propylene glycol, polypropylene glycol, tetramethylene glycol, polytetramethylene glycol, 1,6-hexanediol, neopentyl glycol, 1,4-cyclohexanedimethanol, 3-methyl-1,5-pentanediol, 1,9-nonanediol, and 2-methyl-1,8-octanediol. As examples of the polybasic acid, phthalic acid, isophthalic acid, terephthalic acid, maleic acid, fumaric acid, adipic acid, and sebacic acid can be given. These polyester diols are commercially available as Kurapol(R) P-2010, PMIPA, PKA-A, PKA-A2, PNA-2000 (manufactured by Kuraray Co., Ltd.).

As examples of the polycarbonate diol, polycarbonate of polytetrahydrofuran and polycarbonate of 1,6-hexanediol can be given. Commercially available products include DN-980, 981, 982, 983 (manufactured by Nippon Polyurethane Industry Co., Ltd.), PC-8000 (manufactured by PPG of the U.S.), and PC-THF-CD (manufactured by BASF).

As examples of the polycaprolactone diol, polycaprolactone diols obtained by reacting ε-caprolactone with a diol can be given. Here, given as examples of the diol compound are ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, and 1,4-butanediol. As examples of commercially available products of these polycaprolactone diols, PLACCEL(R) 205, 205AL, 212, 212AL, 220, 220AL (manufactured by Daicel Chemical Industries, Ltd.) can be given.

Examples of polyols other than the above-mentioned polyols include ethylene glycol, propylene glycol, 1,4-butanediol, 1,5-pentanediol, 1,6-hexanediol, neopentyl glycol, 1,4-cyclohexanedimethanol, hydrogenated bisphenol A, hydrogenated bisphenol F, dimethylol compound of dicyclopentadiene, tricyclodecanedimethanol, pentacyclopentadecanedimethanol, β-methyl-δ-valerolactone, polybutadiene with a terminal hydroxyl group, hydrogenated polybutadiene with a terminal hydroxyl group, castor oil-modified polyol, polydimethylsiloxane with a terminal diol, and polydimethylsiloxane carbitol-modified polyol.

The molecular weight of the polyols, in terms of the polystyrene-reduced number average molecular weight, is usually from 50 to 15,000, and preferably from 100 to 8,000.

As commercially available products of the both terminal reactive polysiloxane compound (C), Silaplaine FM-7711, FM-7721, FM-7725 manufactured by Chisso Corp. can be given.

In a preferred embodiment, the composition according to the invention is a composition wherein the both terminal reactive polysiloxane compound (C) is a polydimethylsiloxane compound having a polymerizable unsaturated group and a urethane bond.

The amount of the both terminal reactive polysiloxane compound (C) used in the present invention is preferably 0.1-5 wt%, and particularly preferably 0.3-2 wt%, for 100 wt% of the composition. If the amount of the both terminal reactive polysiloxane compound (C) is less than 0.1 wt%, surface slip characteristics of the cured products may be insufficient; if more than 5 wt%, coatability of the composition may become poor, for example the composition may be repelled when applied to a substrate.

In a preferred embodiment, the curable composition according to the invention comprises:
- 5 - 85wt% of reactive particles (A)
- 10 - 90wt% of a polymerizable organic compound (B)
- 0,1 - 5wt% of a both terminal reactive polysiloxane compound (C) according to formula (2)

In addition to the reactive particles (A), polymerizable organic compound (B), and both terminal reactive polysiloxane (C), a compound having one polymerizable unsaturated group in the molecule, excluding the component (B) and component (C), may be optionally used in the composition of the present invention.

As a component other than the reactive particles (A), polymerizable organic compound (B), and both terminal reactive polysiloxane compound (C), a radical polymerization initiator (hereinafter may be referred to as "radical polymerization initiator (D)") is preferably added to the composition of the present invention.

As examples of the radical polymerization initiator (D), conventional initiators such as a compound which thermally generates active radical species (heat polymerization initiator) and a compound which generates active radical species upon exposure to radiation (light) (radiation polymerization (photopolymerization) initiator) can be given.

There are no specific limitations to the radiation polymerization (photopolymerization) initiator insofar as such an initiator is decomposed by irradiation and generates radicals to initiate polymerization. Examples of such an initiator include acetophenone, acetophenone benzyl ketal, 1-hydroxycyclohexyl phenyl ketone, 2,2-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]- 2-morpholino-propan-1-one, 2-benzyl-2-dimethylamino-1-(4-morpholinophenyl)-butanone-1,4-(2-hydroxyethoxy)phenyl-(2-hydroxy-2-propyl)ketone,2,4,6-trimethylbenzoyldiphenylphosphine oxide, bis-(2,6-dimethoxybenzoyl)-2,4,4-trimethylpentylphosphine oxide, and oligo(2-hydroxy-2-methyl-1-(4-(1-methylvinyl)phenyl)propanone).

As examples of commercially available products of the radiation polymerization (photopolymerization) initiator, Irgacure(R) 184, 369, 651, 500, 819, 907, 784, 2959, CGl1700, CGl1750, CGl1850, CG24-61, Darocur(R) 1116, 1173 (manufactured by Ciba Specialty Chemicals Co., Ltd.), Lucirin(R) TPO, 8893 (manufactured by BASF), Uvecryl(R) P36 (manufactured by UCB), and Esacure(R) KIP150, KIP65LT, KIP100F, KT37, KT55, KT046, KIP75/B (manufactured by Lamberti) can be given.

The amount of the radical polymerization initiator (D) optionally used in the present invention is preferably 0.01-20 parts by weight, and still more preferably 0.1-10 parts by weight for 100 parts by weight of the composition. If the amount is less than 0.01 part by weight, hardness of the cured product may be insufficient. If the amount exceeds 20 parts by weight, the inside (inner layer) of the cured product may remain uncured.

The composition of the present invention may be cured using a radiation polymerization (photopolymerization) initiator and a heat polymerization initiator in combination, as required.

As preferable examples of the heat polymerization initiator, peroxides and azo compounds can be given. Specific examples include benzoyl peroxide, t-butyl peroxybenzoate, and azobisisobutyronitrile.

The composition of the present invention is suitable as an antireflection film or a coating material. As examples of substrates to which the composition is applied, plastics (polycarbonate, polymethacrylate, polystyrene, polyester, polyolefin, epoxy resin, melamine resin, triacetyl cellulose resin, ABS resin, AS resin, norbornene resin), metals, wood, paper, glass, and slates can be given. These substrates may be either in the shape of a plate, a film, or a formed three-dimensional object. Conventional coating methods such as dipping, spray coating, flow coating, shower coating, roll coating, spin coating, and brush coating can be given as coating methods. The thickness of the coating after drying and curing is 0.1-400 µm, and preferably 1-200 µm.

In order to adjust the thickness of the coating, the composition of the present invention may be used after diluting the composition with a solvent. In the case where the composition is used as an antireflection film or a coating material, the viscosity of the composition is usually 0.1-50,000 mPa·s/25°C, and preferably 0.5-10,000 mPa·s/25°C.

The composition of the present invention can be cured by heat and/or radiation (light). In the case of curing the composition by applying heat, an electric heater, infrared lamp, or hot blast, may be used as the heat source. In the case of curing the composition using radiation (light), there are no specific limitations to the source of the radiation insofar as the composition can be cured in a short period of time after being applied. As examples of the source of infrared rays, a lamp, resistance heating plate, and laser can be given. As examples of the source of visible rays, sunlight, a lamp, fluorescent lamp, and laser can be given. As the source of ultraviolet rays, a mercury lamp, halide lamp, and laser can be given. As examples of the source of electron beams, a system of utilizing thermoelectrons produced by a commercially available tungsten filament, a cold cathode system generating electron beams by passing a high voltage pulse through a metal, and a secondary electron system which utilizes secondary electrons produced by the collision of ionized gaseous molecules and a metal electrode can be given. As the source of α-rays, β-rays, and γ-rays, for example, fissionable materials such as Co⁶⁰ can be given. As the source of γ-rays, a vacuum tube which causes accelerated electrons to collide with an anode may be utilized. The radiation may be used either individually or in combination of two or more. In the latter case, the two or more types of radiation may be used either simultaneously or at certain intervals of time.

The cured film of the present invention may be obtained by applying the curable composition to various types of substrates such as a plastic substrate and curing the composition. Specifically, such a cured product can be obtained as a coated form by applying the composition onto an object, drying the coating by removing volatile components at a temperature preferably from 0 to 200°C, and curing the coating by heat and/or radiation. In the case of curing the composition by applying heat, the composition is preferably cured at 20 to 150°C for 10 seconds to 24 hours. When using radiation, use of ultraviolet rays or electron beams is preferable. In this case, the dose of ultraviolet rays is preferably 0.01-10 J/cm², and still more preferably 0.1-2 J/cm². Electron beams are preferably irradiated under the conditions of 10-300 kV, an electron density of 0.02-0.30 mA/cm², and at a dose from 1-10 Mrad.

Because the cured film of the present invention can produce coatings (films) with excellent hardness, scratch resistance, and, depending on the composition, surface slip characteristics, the product is suitable for use as a protective coating material to prevent damages (scratches) or stains on recording disks such as CD, DVD, plastic optical parts, touch panels, film-type liquid crystal elements, plastic containers, or flooring materials, wall materials, and artificial marbles which are used for architectural interior finish; as an antireflection film for film-type liquid crystal elements, touch panels, or plastic optical parts.

Preferred cured films are cured films obtained by curing the curable composition according to any one of claims 1 - 7.

### EXAMPLES

The present invention will be described in more detail by examples, which should not be construed as limiting the present invention. In the examples, "part" and "%" respectively refer to "part by weight" and "wt%" unless otherwise indicated.

In the present invention, "solid content" refers to the content of components after removing volatile components such as a solvent from the composition. Specifically, the solid content refers to the content of residues (nonvolatile components) obtained by drying the composition on a hot plate at a prescribed temperature for one hour.

### Synthesis of organic compound (A2)

### Synthesis Example 1 (A2-1)

20.6 parts of isophorone diisocyanate was added to a solution of 7.8 parts of mercaptopropyltrimethoxysilane and 0.2 part of dibutyltin dilaurate in dry air over one hour while stirring at 50°C. The mixture was stirred for further three hours at 60°C. After the addition of 71.4 parts of pentaerythritol triacylate dropwise over one hour at 30°C, the mixture was stirred for further three hours at 60°C while heating to obtain an organic compound (A2-1). The amount of isocyanate remaining in the product was analyzed to find that the amount was 0.1 % or less.

### Preparation of reactive particles (A)

Preparation of reactive particles (A) will be described in Preparation Examples 1 and 2.

### Preparation Example 1 (A-1)

A mixture of 8.7 parts of the organic compound (A2-1) synthesized in Synthesis Example 1, 91.3 parts of a sol of silica particles (A1-1) (methyl ethyl ketone silica sol, MEK-ST, manufactured by Nissan Chemical Industries, Ltd., number average particle diameter: 0.022 µm, silica concentration: 30%; 27 parts as silica particles), and 0.1 part of ion exchange water was stirred at 60°C for 3 hours. After the addition of 1.4 parts of methyl orthoformate, the mixture was stirred at the same temperature for one hour while heating to obtain a dispersion liquid of the reactive particles (A) (dispersion liquid (A-1)). 2 g of the dispersion liquid (A-1) was weighed on an aluminum dish and dried on a hot plate at 175°C for one hour.

### Preparation Example 2: Preparation of (A-2) Zr particles

A mixture of 2.1 parts of the organic compound (A2-1) synthesized in Synthesis Example 1, 97.9 parts of a sol of zirconia particles (A2-1) (methyl ethyl ketone zirconia sol, number average particle diameter: 0.01 µm, zirconia concentration: 30%; 29 parts as zirconia particles), and 0.1 part of ion exchange water was stirred at 60°C for 3 hours, followed by the addition of 1.0 part of methyl orthoformate. The mixture was stirred at the same temperature for one hour while heating to obtain a dispersion liquid of reactive particles (A) (dispersion liquid (A-2)). 2 g of the dispersion liquid (A-2) was weighed in an aluminum dish and dried on a hot plate at 175°C for one hour. The dried product was weighed to confirm that the solid content was 31 %.

### Synthesis of both terminal reactive polysiloxane compound (C)

Synthesis of a compound (C) is shown in the following Synthesis Examples 2 and 3.

### Synthesis Example 2 (C-1)

A reaction vessel equipped with a stirrer was charged with 23,0 parts of tolylene diisocyanate, 0.08 part of dibutyltin dilaurate, and 0.02 part of 2,6-di-t-butyl-p-cresol. The mixture was cooled to 15°C or less. 16.8 parts of hydroxyethyl acrylate was added dropwise with stirring while controlling the temperature at 30°C or lower. After the addition, the mixture was allowed to react at 30°C for one hour. Next, 60.1 parts of α,ω-[3-(2'-hydroxyethoxy)propyl]polydimethylsiloxane with a hydroxyl group equivalent of 1,000 (Silaplaine(R) (FM-4411 manufactured by Chisso Corp.) was added and the mixture was stirred at 20-55°C. The reaction was terminated when the residual isocyanate was 0.1 wt% or less. The number average molecular weight of the resulting product was determined by measuring the polystyrene-reduced number average molecular weight using AS-8020, manufactured by Tosoh Corp., by gel permeation chromatography (hereinafter the same). As a result, the product was confirmed to contain, in addition to a both terminal reactive polydimethylsiloxane compound with a molecular weight of 1,900, 20 wt% of a compound consisting of one mol of tolylene diisocyanate and two parts of hydroxyethyl acrylate. The both terminal reactive polydimethylsiloxane compound thus obtained is indicated as C-1.

### Synthesis Example 3 (C'-1)

A reaction vessel equipped with a stirrer was charged with 16.6 parts of isophorone diisocyanate, 0.08 part of dibutyltin dilaurate, and 0.02 part of 2,6-di-t-butyl-p-cresol. The mixture was cooled to 15°C or less. 8.7 parts of hydroxyethyl acrylate was added dropwise with stirring while controlling the temperature at 30°C or lower. After the addition, the mixture was allowed to react at 30°C for one hour. Next, 74.7 parts of α-[3-(2'-hydroxyethoxy)propyl]-ω-trimethylsilyloxypolydimethylsiloxane with a hydroxyl group equivalent of 1,000 (Silaplaine(R). FM-0411 manufactured by Chisso Corp.) was added and the mixture was stirred at 20-55°C. The reaction was terminated when the residual isocyanate was 0.1 wt% or less. The number average molecular weight of the resulting polydimethylsiloxane compound was 1,400. The terminal reactive polydimethylsiloxane compound thus obtained is indicated as C'-1.

### Preparation Examples of composition

Preparation of the composition of the present invention is described in Examples 1-9.

### Example 1

141.0 parts of the dispersion liquid (A-1) prepared in Preparation Example 1 (reactive particles: 49.35 parts, dispersion medium: methyl ethyl ketone (MEK)), 46.06 parts of dipentaerythritol hexaacrylate (B-1), 2.87 parts of 1-hydroxycyclohexyl phenyl ketone (D-1), 1.72 parts of 2-methyl-1-(4-(methylthio)phenyl)-2-morpholinopropanone-1 (D-2), and 63.93 parts of propylene glycol monomethyl ether acetate (PGMEA) were stirred at 50°C for two hours to obtain a homogeneous solution. The solution was concentrated under reduced pressure using a rotary evaporator until the amount of liquid was 163.93 parts. After the addition of 0.60 part of the both terminal reactive polydimethylsiloxane compound manufactured in Synthesis Example 2, 28.93 parts of propylene glycol monomethyl ether acetate (PGMEA), and 3.21 parts of methyl ethyl ketone (MEK), the mixture was stirred at 50°C for 30 minutes to obtain a homogeneous composition solution. The solid content of the composition was determined in the same manner as in Example 1 to find that the solid content was 51 %.

Weight ratios of the components of the composition are shown in Table 1.

**Table 1**

| | Example | | | | | | | | | Comparative Example | | | |
|---|---|---|---|---|---|---|---|---|---|---|---|---|---|
| | 1 | 2 | 3 | 4 | 5 | 6 | 7 | 8 | 9 | 1 | 2 | 3 | 4 |
| A-1 | 49.35 | 49.35 | 49.35 | - | 49.35 | 49.35 | 49.35 | 73.75 | 66.38 | 49.35 | 49.35 | 49.35 | 73.90 |
| A-2 | - | - | - | 76.95 | - | - | - | - | - | - | - | - | - |
| B-1 | 46.06 | 46.06 | - | 18.56 | 46.06 | 46.06 | 46.06 | - | - | 46.06 | 46.06 | 46.06 | - |
| B-2 | - | - | 46.06 | - | - | - | - | - | - | - | - | - | - |
| B-3 | - | - | - | - | - | - | - | 23.65 | 21.29 | - | - | - | 23.70 |
| C-1 | 0.60 | - | - | - | - | 1.50 | - | - | - | - | - | - | - |
| C-2 | - | 0.60 | 0.45 | 0.50 | 0.20 | - | 0.05 | - | - | - | - | - | - |
| C'-1 | - | - | - | - | - | - | - | - | - | - | 0.45 | - | - |
| C'-2 | - | - | - | - | - | - | - | - | - | - | - | 0.30 | - |
| C'-3 | - | - | - | - | - | - | - | - | - | - | - | 0.15 | - |
| C'-4 | - | - | - | - | - | - | - | 0.20 | 0.18 | - | - | - | - |
| D-1 | 2.87 | 2.87 | 2.87 | 2.81 | 2.87 | 2.87 | 2.87 | 1.50 | 1.35 | 2.87 | 2.87 | 2.87 | 1.50 |
| D-2 | 1.72 | 1.72 | 1.72 | 1.68 | 1.72 | 1.72 | 1.72 | 0.90 | 0.81 | 1.72 | 1.72 | 1.72 | 0.90 |
| MEK | 9.62 | 9.62 | 9.62 | 19.22 | 9.62 | 9.62 | 9.62 | - | - | 9.62 | 9.62 | 9.62 | - |
| PGMEA | 86.61 | 86.61 | 86.61 | 19.22 | 86.61 | 86.61 | 86.61 | - | 10.00 | 86.61 | 86.61 | 86.61 | - |
| MIBK | - | - | - | 57.65 | - | - | - | - | - | - | - | - | - |
| Total amount | 196.83 | 196.83 | 196.68 | 196.59 | 196.43 | 197.73 | 196.28 | 100.00 | 100.00 | 196.23 | 196.68 | 196.68 | 100.00 |
| Solid content (%) | 51 | 51 | 51 | 51 | 51 | 51 | 51 | 52 | 47 | 51 | 51 | 51 | 52 |

In Table 1, the amount of the reactive particles (A) and oxide particles (A1) indicates the weight (parts by weight) of nonvolatile components included in the charged amount of each particle dispersion sol.
The meanings of the abbreviations shown in Table 1 are as follows.
A-1: Dispersion liquid of reactive particles (A) prepared in Preparation Example 1
B-1: Dipentaerythritol hexaacrylate
B-3: Dipentaerythritol hexa/penta acrylate
C-1: Both terminal reactive polydimethylsiloxane compound (C) manufactured in Synthesis Example 2
C-2: α,ω-[3-(2'-methacryl)propyl]polydimethylsiloxane (Silaplaine FM-7711 manufactured by Chisso Corp.)
C'-1: Terminal reactive polydimethylsiloxane compound (C) manufactured in Synthesis Example 3 (C'-1 has the same structure as C-2, except for having an acryloyl group only on one terminal as a polymerizable group.)
C'-2: Dimethylpolysiloxane-polyoxyalkylene copolymer (DC57, manufactured by Dow Corning Toray Silicone Co., Ltd.) (C'-2 is a polysiloxane compound having no polymerizable group.)
C'-3: Dimethylpolysiloxane-polyoxyalkylene copolymer (DC190, manufactured by Dow Corning Toray Silicone Co., Ltd.) (C'-3 is a polysiloxane compound having no polymerizable group.)
C-4: Acrylate difunctional silicone
D-1: 1-hydroxycyclohexyl phenyl ketone
D-2: 2-Methyl-1-[4-(methylthio)phenyl]-2-morpholino-1-propanone
MEK: Methyl ethyl ketone
PGMEA: Propylene glycol monomethyl ether acetate

### Examples 2, 3, 5, 6, 7, 8 and 9

Compositions were prepared in the same manner as in Example 1 except for using the components shown in Table 1.

### Example 4

256.5 parts of the dispersion liquid (A-2) prepared in Preparation Example 2 (reactive particles: 76.95 parts, dispersion medium: methyl ethyl ketone (MEK)), 18.56 parts of dipentaerythritol hexaacrylate (B-1), 2.81 parts of 1-hydroxycyclohexyl phenyl ketone (D-1), 1.68 parts of 2-methyl-1-(4-(methylthio)phenyl)-2-morpholinopropanone-1 (D-2), and 96.49 parts of methyl isobutyl ketone (MIBK) were stirred at 50°C for two hours to obtain a homogeneous solution. The solution was concentrated under reduced pressure using a rotary evaporator until the amount of liquid was 176.87 parts. After the addition of 0.50 part of the both terminal reactive polydimethylsiloxane compound manufactured in Synthesis Example 2 and 19.22 parts of propylene glycol monomethyl ether acetate (PGMEA), the mixture was stirred at 50°C for 30 minutes to obtain a homogeneous composition solution. The solid content of the composition was determined in the same manner as in Example 1 to find that the solid content was 51 %.

### Comparative Examples 1-4

Compositions for Comparative Examples 1-4 were prepared in the same manner as in Example 1 using the components shown in Table 1.

### Evaluation of curable composition and cured film thereof

To demonstrate the effects of the composition of the present invention, coatability of the compositions and the cured films obtained from the above-described compositions by coating, drying, and exposure to light were evaluated. The evaluation methods are described below. The evaluation results are shown in Table 2 and 3.

### (1) Conditions for application, drying, and curing

Each composition obtained in Examples 1-7 and Comparative Examples 1-3 was applied to a substrate using a bar coater so that the thickness after drying was 5 µm. The composition was dried at 80°C in a hot blast oven for 3 minutes and then irradiated at a dose of 1 J/cm² using a conveyer-type mercury lamp to obtain a cured film. Pencil hardness, adhesion to substrates, steel wool (SW) scratch resistance, and surface slip characteristics of the cured film were evaluated. The results are shown in Table 2.

As the substrate, glass was used for evaluation of pencil hardness. For evaluation of adhesion to substrates, steel wool (SW) scratch resistance, and surface slip characteristics, a polyethylene terephthalate (PET) film with a thickness of 188 µm (PET film A4300, manufactured by Toyobo Co., Ltd.) was used.

### (2) Evaluation method

### Pencil hardness

Films cured on the glass substrates were evaluated according to JIS K5400.

### Adhesion to substrate

In the cellophane tape cross-cut peeling test according to JIS K5400, the number of remaining 1 mm x 1 mm squares among 100 squares was counted and the percentage was determined to evaluate the films cured on the surface of the PET film.

### Steel wool (SW) scratch resistance

The Gakushin-type abrasion tester manufactured by Tester Sangyo Co., Ltd. was reciprocated 30 times using #0000 steel wool with a load of 500 g to evaluate scratch conditions of the films cured on the surface of the PET film by naked eye observation. The case where no scratch was observed was evaluated as "Good", and the case where a scratch was observed was evaluated as "Bad".

### Surface slip characteristics

The surface slip characteristics were evaluated by calculating a dynamic friction coefficient on the surface of the films cured on the PET film, wherein the dynamic friction coefficient was determined from a stress when the films were pulled at a pulling rate of 300 mm/min using a surface property tester (manufactured by Shinto Scientific Co., Ltd.) by installing an iron ball with a curvature radius of 4 mm to apply a load of 100 g.

In addition, to evaluate stability of the surface slip characteristics with the passage of time, the cured films were preserved in an oven at 80°C and removed from the oven after 150 hours, 300 hours, and 500 hours to measure the surface slip characteristics.

### External appearance of cured film

External appearance and transparency of the resulting cured films were observed by naked eyes. The cured films without bleed-out or whitening were indicated by "Good", and otherwise by "Bad".

Each composition obtained in Examples 8 and 9 and comparative example 4 was characterized as follows.

Spin coating experiments were performed on CD optical media grade polycarbonate disc non-metallized blanks. Discs were placed on a spin-coater equipped with optical media chuck. Coatings were applied to the discs while stationary. Discs were spin coated at 7500 rpm, 3500 rpm per s, 12 seconds. Solvents were evaporated from wet coatings for 3 minutes at room temperature. Coated discs were subjected to UV dose of 1.0 J/cm² in an air atmosphere using a 300W Fusion D-lamp. Pencil Hardness on spin-coated discs was performed as per ASTM D3363.

Spin coating quality evaluation was performed visually. Coatings in comparative examples can display insufficient spin-coating quality that is presented as an uneven non-uniform surface. This surface quality is noted as poor. Coatings within the invention can be spin coated in the same manner to very smooth and defect-free coating layers.

Taber abrasion was performed as per ASTM 01044 using 500g applied weights on CS10F abrading wheels for 500 cycles. %Haze of samples was measured using a BYK-Gardner Haze-gard plus model haze/transmission meter.

**Table 2**

| | Example | | | | | | | Comparative Example | | |
|---|---|---|---|---|---|---|---|---|---|---|
| | 1 | 2 | 3 | 4 | 5 | 6 | 7 | 1 | 2 | 3 |
| Properties of cured film | | | | | | | | | | |
| Pencil hardness | 8H | 8H | 8H | 8H | 8H | 8H | 8H | 8H | 8H | 8H |
| Adhesion | 100 | 100 | 100 | 100 | 100 | 100 | 100 | 100 | 100 | 100 |
| SW scratch resistance | Good | Good | Good | Good | Good | Good | Good | Good | Good | Good |
| surface slip characteristics Not heated after curing | 0.17 | 0.14 | 0.14 | 0.16 | 0.15 | 0.12 | 0.15 | 0.70 | 0.07 | 0.35 |
| After heated at 80°C for 150 hours | 0.17 | 0.14 | 0.14 | 0.16 | 0.10 | 0.12 | 0.30 | 0.65 | 0.07 | 0.35 |
| After heated at 80°C for 300 hours | 0.17 | 0.14 | 0.14 | 0.16 | 0.16 | 0.15 | 0.65 | 0.62 | 0.08 | 0.35 |
| After heated at 80°C for 500 hours | 0.18 | 0.14 | 0.14 | 0.16 | 0.90 | 0.14 | 0.66 | 0.62 | 0.07 | 0.42 |

| External appearance | | | | | | | | | | |
|---|---|---|---|---|---|---|---|---|---|---|
| Bleed-out | Good | Good | Good | Good | Good | Good | Good | Good | Bad | Bad |

**Table 3**

| | Example | | Comparative Example |
|---|---|---|---|
| | 8 | 9 | 4 |
| Pencil Hardness - spin coated discs | 6H | 6H | 3H |
| Spin coated quality | Good | Excellent | Poor |
| Taber abrasion - %Haze after 500 cycles | 0.58% | 0.48% | 3% |

### Effect of the Invention

As described above, a curable composition exhibiting excellent coatability and capable of forming coatings (films) that have superior scratch resistance and high hardness, and that, depending on the composition, are free from bleed-out and can exhibit superior and consistent surface slip characteristics on the surface of various substrates, and a cured film made from the curable composition are provided by the present invention.

## Claims

1. A curable composition comprising: (A) particles obtained by reacting (A1) oxide particles of at least one element selected from the group consisting of silicon, aluminum, zirconium, titanium, zinc, germanium, indium, tin, antimony, and cerium with (A2) an organic compound having a polymerizable unsaturated group and a hydrolyzable silyl group in the molecule (hereinafter referred to as "reactive particles"), (B) a polymerizable organic compound having two or more polymerizable unsaturated groups, and (C) a both terminal reactive polysiloxane compound other than the component (B) having a polymerizable group on both terminals,

2. The curable composition according to claim 1, wherein the component (A2) is an organic compound having a polymerizable unsaturated group, a hydrolyzable silyl group, and a group shown by the following formula (1): 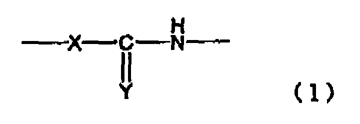 wherein X represents NH, O (oxygen atom), or S (sulfur atom), and Y represents O or S.

3. The curable composition according to claim 1 or claim 2, wherein the both terminal reactive polysiloxane compound (C) is a compound shown by the following formula (2): 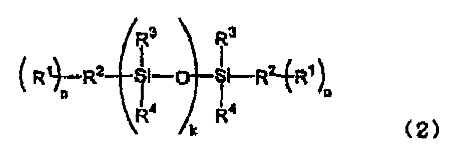 wherein R¹ is an organic group having an acryloxy group or methacryloxy group, R² is an organic group having a valence of (n+1), R³ and R⁴ are individually a methyl group or phenyl group, n is a numeral from 1 to 3, and k is a numeral from 1 to 150.

4. The curable composition according to any one of claims 1-3, wherein the both terminal reactive polysiloxane compound (C) is a polydimethylsiloxane compound having a polymerizable unsaturated group and a urethane bond.

5. The curable composition according to claim 3, wherein R¹ in the formula (2) representing the both terminal reactive polysiloxane compound (C) is an acryloxy group.

6. The curable composition according to claim 3, containing the following amounts of the components (A), (B), and (C):
(A) reactive particles: 5-85 wt%
(B) polymerizable organic compound: 10-90 wt%
(C) both terminal reactive polysiloxane compound: 0.1-5 wt%

7. The curable composition according to any one of claims 1-6, wherein the composition also comprises a solvent with a medium or low evaporation rate.

8. A cured film obtained by curing the curable composition according to any one of claims 1 to 7.

## Patentansprüche

1. Härtbare Zusammensetzung, umfassend: (A) Teilchen, die erhalten wurden durch Umsetzen von (A1) Oxidteilchen von wenigstens einem Element, das aus der. Gruppe ausgewählt ist, die aus Silicium, Aluminium, Zirconium, Titan, Zink, Germanium, Indium, Zinn, Antimon und Cer besteht, mit (A2) einer organischen Verbindung, die eine polymerisierbare ungesättigte Gruppe und eine hydrolysierbare Silylgruppe im Molekül aufweist (im Folgenden als "reaktive Teilchen" bezeichnet), (B) eine polymerisierbare organische Verbindung, die zwei oder mehr polymerisierbare ungesättigte Gruppen aufweist, und (C) eine an beiden Enden reaktive, von Komponente (B) verschiedene Polysiloxanverbindung, die an beiden Enden eine polymerisierbare Gruppe aufweist.

2. Härtbare Zusammensetzung gemäß Anspruch 1, wobei die Komponente (A2) eine organische Verbindung ist, die eine polymerisierbare ungesättigte Gruppe, eine hydrolysierbare Silylgruppe und eine durch die folgende Formel (1) gezeigte Gruppe aufweist: 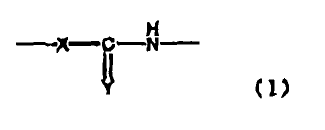 wobei X = NH, O (Sauerstoffatom) oder S (Schwefelatom) darstellt und Y O oder S darstellt.

3. Härtbare Zusammensetzung gemäß Anspruch 1 oder 2, wobei die an beiden Enden reaktive Polysiloxanverbindung (C) eine durch die folgende Formel (2) gezeigte Verbindung ist: 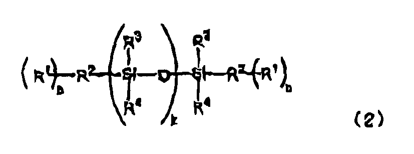 wobei R¹ eine organische Gruppe mit einer Acryloxygruppe oder Methacryloxygruppe ist, R² eine organische Gruppe mit einer Wertigkeit von (n+1) ist, R³ und R⁴ individuell eine Methylgruppe oder Phenylgruppe sind, n eine Zahl von 1 bis 3 ist und k eine Zahl von 1 bis 150 ist.

4. Härtbare Zusammensetzung gemäß einem der Ansprüche 1 bis 3, wobei die an beiden Enden reaktive Polysiloxanverbindung (C) eine Polydimethylsiloxanverbindung ist, die eine polymerisierbare ungesättigte Gruppe und eine Urethanbindung aufweist.

5. Härtbare Zusammensetzung gemäß Anspruch 3, wobei R¹ in Formel (2), die die an beiden Enden reaktive Polysiloxanverbindung (C) darstellt, eine Acryloxygruppe ist.

6. Härtbare Zusammensetzung gemäß Anspruch 3, die die folgenden Mengen der Komponenten (A), (B) und (C) enthalten:
(A) reaktive Teilchen: 5-85 Gew.-%
(B) polymerisierbare organische Verbindung: 10-90 Gew.-%
(C) an beiden Enden reaktive Polysiloxanverbindung: 0,1-5 Gew.-%,

7. Härtbare Zusammensetzung gemäß einem der Ansprüche 1 bis 6, wobei die Zusammensetzung auch ein Lösungsmittel mit einer mittleren oder geringen Verdampfungsgeschwindigkeit umfasst.

8. Gehärteter Film, erhalten durch Härten der härtbaren Zusammensetzung gemäß einem der Ansprüche 1 bis 7.

## Revendications

1. Composition durcissable comprenant : (A) des particules obtenues par réaction de (A1) particules d'oxyde d'au moins un élément choisi dans le groupe constitué par le silicium, l'aluminium, le zirconium, le titane, le zinc, le germanium, l'indium, l'étain, l'antimoine et le cérium, avec (A2) un composé organique comprenant un groupe insaturé polymérisable et un groupe silyle hydrolysable dans la molécule (appelé « particules réactives » dans la suite), (B) un composé organique polymérisable comprenant deux groupes insaturés polymérisables ou plus, et (C) un polysiloxane réactif aux deux extrémités, autre que le composant (B) comprenant un groupe polymérisable aux deux extrémités.

2. Composition durcissable selon la revendication 1, dans laquelle le composant (A2) est un composé organique comprenant un groupe insaturé polymérisable, un groupe silyle hydrolysable et un groupe représenté par la formule (1) suivante : 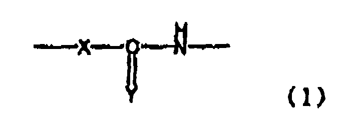 dans laquelle X représente NH, O (un atome d'oxygène), ou S (un atome de soufre), et Y représente O ou S.

3. Composition durcissable selon la revendication 1 ou la revendication 2. dans laquelle le polysiloxane réactif aux deux extrémités (C) est un composé représenté par la formule (2) suivante : 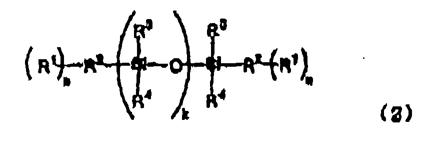 dans laquelle R¹ est un groupe organique comprenant un groupe acryloxy ou un groupe méthacryloxy, R² est un groupe organique ayant une valence de (n+1), R³ et R⁴ sont individuellement un groupe méthyle ou un groupe phényle, n est un nombre entier de 1 à 3 et k est un nombre entier de 1 à 150.

4. Composition durcissable selon l'une quelconque des revendications 1 - 3, dans laquelle le polysiloxane réactif aux deux extrémités (C) est un polydiméthylsiloxane comprenant un groupe insaturé polymérisable et une liaison uréthane.

5. Composition durcissable selon la revendication 3, dans laquelle R¹ dans la formule (2) représentant le polysiloxane réactif aux deux extrémités (C) est un groupe acryloxy,

6. Composition durcissable selon la revendication 3, contenant les quantités suivantes des composants (A), (B) et (C) :
(A) particules réactives : 5 -- 85 % en poids,
(B) composé organique polymérisable : 10 - 90 % en poids,
(C) polysiloxane réactif aux deux extrémités : 0,1 - 5 % en poids.

7. Composition durcissable selon l'une quelconque des revendications 1 - 6, dans laquelle la composition comprend aussi un solvant présentant une vitesse d'évaporation moyenne à faible.

8. Film durci obtenu par durcissement de la composition durcissable selon l'une quelconque dos revendications 1 - 7.
